# NEUE EUROPÄISCHE PATENTSCHRIFT

(11) **EP 2 008 848 B2**
(45) Veröffentlichungstag und Bekanntmachung des Hinweises auf die Entscheidung über den Einspruch: **14.10.2015**
(45) Hinweis auf die Patenterteilung: 01.02.2012
(21) Anmeldenummer: 08009055.8
(22) Anmeldetag: 16.05.2008
(51) Int. Cl.: B60J 7/16, B60R 9/055

(54) **Kraftfahrzeugdach**
Motor vehicle roof
Toit de véhicule automobile

(30) Priorität: 26.06.2007 DE 102007029582
(43) Veröffentlichungstag der Anmeldung: 31.12.2008
(73) Patentinhaber: GM Global Technology Operations LLC, Detroit, MI 48265-3000 (US)
(72) Erfinder: Lungershausen, Dirk Rainer, 65207 Wiesbaden (DE)
(74) Vertreter: Strauss, Peter

(56) Entgegenhaltungen:
- EP-A- 1 514 734
- EP-A- 1 535 779
- DE-A1- 10 017 712
- DE-A1- 10 359 513
- DE-A1- 19 723 902
- DE-A1- 19 831 134
- DE-A1-102006 014 206
- JP-A- 2000 033 819
- US-A- 3 319 996
- US-A1- 2005 280 292

## Beschreibung

Die Erfindung betrifft ein Kraftfahrzeugdach, insbesondere für ein Großraumpersonenkraftfahrzeug, wie beispielsweise Van, Kombi oder Kleinbus, wobei das Kraftfahrzeugdach insbesondere ein Teil der Kraftfahrzeugkarosserie sein kann.

Aus DE 198 31 133 A1 ist ein Kraftfahrzeugdach bekannt, das ein Basisdach mit einem Dachhimmel aufweist. Innerhalb des Basisdachs ist ein Dachsegment vorgesehen, das sich über die gesamte Breite des Basisdachs erstreckt und aus dem Basisdach heraus geschwenkt werden kann. Im geschlossenen Zustand fluchtet das Dachsegment mit der Oberfläche des Basisdachs. Im geöffneten Zustand ist das Dachsegment im Wesentlichen parallel zur Ausgangslage angeordnet, um einen kleinen Spalt zwischen dem Dachsegment und dem Basisdach auszubilden, der einen Druckausgleich im Kraftfahrzeuginnenraum ermöglicht für den Fall, dass ein oder mehrere Airbags ausgelöst werden.

Nachteilig bei einem derartigen Kraftfahrzeugdach ist, dass es sich bei dem beweglichen Dachsegment um ein sicherheitskritisches Bauteil handelt, das in seiner Funktion nicht beeinträchtigt werden darf. Insbesondere bei Großraumpersonenkraftfahrzeugen, wie beispielsweise Vans, Kombis oder Kleinbusen, ist dies nachteilig, da derartige Kraftfahrzeuge häufig zum Transport von Gegenständen, beispielsweise Gepäckstücken oder sperrigen Gegenständen verwendet werden. Für die Funktionalität insbesondere für ein Großraumpersonenkraftfahrzeugen ist es daher besonders wichtig, dass Gegenstände auch auf dem Dach transportiert werden können. Die Möglichkeit Gegenstände auf dem Dach zu transportieren wird jedoch durch ein in einem Notfall ausfahrbares Dachsegment deutlich beeinträchtigt, da im Bereich des Dachsegments aus Sicherheitsgründen keine Gegenstände transportiert werden können.

Es ist die Aufgabe der Erfindung ein Kraftfahrzeugdach zu schaffen, das ohne die Sicherheit signifikant zu beeinträchtigen den Transport von Gegenständen verbessert.

Die Lösung der Aufgabe erfolgt erfindungsgemäß durch die Merkmale des Anspruchs 1. Bevorzugte Weiterbildungen der Erfindung sind in den Unteransprüchen angegeben.

Das erfindungsgemäße Kraftfahrzeugdach, das insbesondere für ein Großraumpersonenkraftfahrzeug, beispielsweise Van, Kombi, Transporter bis 7,5 t oder Kleinbus, geeignet ist, weist ein Basisdach auf, durch das insbesondere ein Dachhimmel des Kraftfahrzeugs ausgebildet sein kann. Ferner ist ein Dachsegment vorgesehen, das relativ zum Basisdach bewegbar ist und insbesondere im Wesentlichen nur in vertikaler Richtung bewegbar ist. Erfindungsgemäß weist das Dachsegment mindestens ein oberes relativ zum Dachsegment beweglich mit dem Dachsegment verbundenes Dachelement auf. Zusätzlich bzw. alternativ weist das Basisdach mindestens ein unteres relativ zum Basisdach beweglich mit dem Basisdach verbundenes Dachelement auf. Das obere Dachelement und/oder das untere Dachelement weisen erfindungsgemäß Lamellen auf, die untereinander und/oder übereinander und/oder ineinander und/oder hintereinander zusammenschiebbar sind.

Durch das untere und/oder obere Dachelement kann besonders einfach ein zwischen dem Basisdach und dem Dachsegment entstehendes Volumen geöffnet und geschlossen werden, um einen zusätzlichen Stauraum insbesondere zur Aufnahme von Gepäckstücken auszubilden. Der zusätzliche Stauraum weist insbesondere das zwischen dem Basisdach und dem Dachsegment im Vergleich zum geschlossenen Zustand zusätzlich zugängliche Volumen auf, wobei vorzugsweise dieses Volumen durch das Dachsegment überdacht ist. Der Stauraum ist insbesondere derart dimensioniert, dass beispielsweise ein Koffer allein von dem zusätzlichen Stauraum aufgenommen werden kann. Durch das bewegliche Dachelement wird besonders einfach der Zugang zu dem zusätzlichen Stauraumvolumen ermöglicht, das bei Bedarf zwischen dem Dachhimmel und dem ausgefahrenen Dachsegment ausgebildet wird. Dadurch kann das Kraftfahrzeugdach insbesondere auch bei Kleinwagen, Sportwagen oder Supersportwagen verwendet werden, bei denen in der Regel kaum Stauraum vorgesehen ist. Da im geschlossenen Zustand das Kraftfahrzeugdach kaum den Luftwiderstand erhöht, wird bei für hohe Geschwindigkeiten ausgelegten Fachzeugen, wie insbesondere Sportwagen, die Höchstgeschwindigkeit kaum beeinträchtig, wobei im Bedarfsfall zusätzlicher Stauraum geschaffen werden kann, wenn es nicht auf die Höchstgeschwindigkeit sondern auf das zur Verfügung stehenden Transportvolumen ankommt. Für den Fall, dass ein oberes bewegliches Dachelement vorgesehen ist, ist es möglich Gepäckstücke oder andere sperrige Ladung von der Dachseite her zu laden. In dem Fall eines unteren beweglichen Dachelements kann der Stauraum nach dem Beladen zum Fahrgastinnenraum abgegrenzt werden. Das Design des Dachhimmels wird dadurch nicht beeinträchtigt.Zusätzlich kann das untere Dachelement als Ablageboden für in den Stauraum abgelegte Gegenstände dienen. Mit Hilfe des unteren Dachelements kann also der Fahrgastinnenraum nicht nur bei Bedarf vergrössert werden, sondern es ist auch möglich zusätzliche Ablagefläche für zu transportierende Gegenstände zu schaffen. Vorzugsweise fluchtet das untere Dachelement mit dem an der zum Kraftfahrzeuginnenraum weisenden Seite des Basisdachs angeordneten Dachhimmel.

Durch die beim oberen und/oder unteren Dachelement vorgesehenen Lamellen kann das Dachelement in einen besonders kompakten Zustand überführt werden, so dass besonders wenig Stauraum für das zusammengeschobene Dachelement benötig wird. Da das Dachsegment einen so grossen Abstand zum Basisdach einnehmen kann, dass Gepäckstücke in dem zusätzlichen Volumen aufgenommen werden können, ist es nicht erforderlich ausserhalb des Kraftfahrzeugdachs auf der Oberfläche des Dachsegments Gepäckstücke zu befestigen, sodass der Transport von Gepäckstücken verbessert ist. Gleichzeitig kann das mindestens eine bewegliche Dachelement derart ausgestaltet sein, dass in dem Fall auslösender Airbags ein Druckausgleich über das zu öffnende Dachelement möglich ist, wodurch die Sicherheit nicht beeinträchtigt wird. Hierzu ist beispielsweise die Bewegung von lediglich einer einzigen Lamelle ausreichend.Eine Bewegung des gesamten Dachsegments, um ein Druckausgleich zu ermöglichen, ist nicht erforderlich. Insbesondere bei länglichen und/oder sperrigen Gegenständen ist es möglich diese Gegenstände zwischen dem Dachsegment und dem Basisdach festzuklemmen, so dass eine zusätzliche Sicherung der Ladung erreicht wird.

Die Lamellen sind untereinander und/oder übereinander und/oder ineinander zusammenschiebbar. Das Dachelement kann dadurch von einem länglichen flächigen Zustand in den kompakten Zustand überführt werden. In dem länglichen flächigen Zustand können die Lamellen des Dachelements den Stauraum verschliessen. Im zusammen geschobenen kompakten Zustand ist der Stauraum geöffnet, wobei das Dachelement beim Beladen des Stauraums mit Gepäckstücken nicht im Weg ist. Je nach Anwendungsfall können die Lamellen insbesondere auch eine Drehung, beispielsweise um 90 deg. ± 10 deg. ausführen, so dass die Lamellen mit ihrer im geschlossenen Zustand aufeinander zugerichteten Stirnseiten im geöffneten Zustand nach oben bzw. unten weisen. Die Lamellen sind in diesen Fall hintereinander angeordnet, wobei die Seiten mit den grössten Flächen im kompakten geöffneten Zustand ebenfalls aufeinander zu weisen.

In einer besonders bevorzugten Ausführungsform weist das Kraftfahrzeugdach einen Spoiler auf, der mit dem Basisdach beweglich oder unbeweglich verbunden ist. In diesem Fall können die Lamellen des Dachelements im zusammen geschobenen Zustand unterhalb des Spoilers angeordnet werden, so dass die Lamellen im Wesentlichen in dem zwischen dem Spoiler und dem Basisdach spitz zulaufenden Bereich im kompakten Zustand angeordnet werden können. Die zusammen geschobenen Lamellen sind in diesem Fall in einem Volumen des Stauraums angeordnet, der zum Beladen und Entladen des Stauraums in der Regel am wenigsten benötigt wird.

Das obere Dachelement ist zumindest teilweise transparent ausgestaltet, und das untere Dachelement ist undurchsichtig. Durch die Transparenz des oberen Dachelements wird durch das Dachelement ein Fenster ausgebildet, um die Helligkeit im Kraftfahrzeuginnenraum zu verbessern, wenn der zusätzliche Stauraum nicht benötigt wird. Erforderlichenfalls kann das untere undurchsichtige Dachelement in einen geschlossenen Zustand gebracht werden, um einen Sonnenschutz auszubilden oder in einen geöffneten Zustand gebracht werden, um das Sonnenlicht in den Kraftfahrzeuginnenraum hinein zu lassen. Da das untere Dachelement mehrere Lamellen aufweist, lässt sich die Sonnenschutzfunktion besonders einfach realisieren.

In einer bevorzugten Ausführungsform ist insbesondere zwischen dem Dachhimmel des Basisdachs und dem Dachsegment ein in den Stauraum weisender Beladungssensor zur Detektion von Gegenständen vorgesehen. Der Beladungssensor detektiert, ob im zwischen dem Dachsegment und dem Basisdach ausgebildeten Stauraum ein Gegenstand angeordnet ist, so dass zumindest ein Warnsignal abgegeben werden kann, fall das untere Dachelement bewegt werden soll. Ein unbeabsichtigtes Herausfallen von Gegenständen aus dem Stauraum in den Kraftfahrzeuginnenraum kann dadurch vermieden werden. Insbesondere ist der Beladungssensor mit einer Betätigungseinrichtung und/oder einer Antriebseinheit für die Betätigungseinrichtung verbunden, so dass ein Öffnen des unteren Dachelements nur dann ermöglicht wird, wenn keine Ladung vom Beladungssensor detektiert wird.In dem Fall, dass Ladung detektiert wird, kann der Beladungssensor einen Verriegelungsmechanismus aktivieren, der ein Öffnen des unteren Dachsegments verhindert. Der Beladungssensor kann passiv oder aktiv ausgestaltet sein, wobei bei einer aktiven Sensorik die Beladungssensor vorzugsweise erst dann insbesondere kurzzeitig betätigt wird, wenn das untere Dachelement betätigt werden soll und hierzu beispielsweise ein elektrischer Impuls ausgesendet wurde, der zuerst den Beladungssensor startet bevor in Abhängigkeit des vom Beladungsensors erhaltenen Signals das untere Dachelement geöffnet wird. Der Beladungssensor kann beispielsweise als Dehnungsmessstreifen das Gewicht eines auf dem unteren Dachelement abgelegten Gegenstands detektieren. Ferner kann mit Hilfe von Ultraschall und/oder Laser und/oder mindestens einer Lichtschranke ein im Stauraum befindliches Volumen detektiert werden.

Im geschlossenen Zustand liegt das Dachsegment im Wesentlichen an dem Basisdach an. Im geöffneten Zustand, das heisst wenn das Dachsegment relativ zum Basisdach beabstandet angeordnet ist, wird zwischen dem Basisdach und dem Dachsegment der zusätzliche Stauraum zur Aufnahme von Gepäckstücken ausgebildet. Der Stauraum ist insbesondere derart dimensioniert, dass beispielsweise ein Koffer allein von dem zusätzlichen Stauraum aufgenommen werden kann.

Vorzugsweise ist mindestens eine Verriegelungseinrichtung vorgesehen, um das Dachelement und/oder das Dachsegment und/oder einzelne Lamellen insbesondere in verschiedenen Positionen arretieren zu können. Hierzu kann beispielsweise ein Rastmechanismus vorgesehen sein oder eine Bremse, die das Dachelement und/oder das Dachsegment und/oder die Lamelle insbesondere stufenlos feststellen kann. Besonders bevorzugt kann die Verriegelungseinrichtung ferngesteuert betätigt werden. Dadurch ist es beispielsweise möglich mit einem Fernbedienungsimpuls eines Kraftfahrzeugschlüssels das Dachelement und/oder das Dachsegment und/oder die mindestens eine Lamelle zu entriegeln oder zu verriegeln. Zusätzlich bzw. alternativ kann das Dachelement und/oder das Dachsegment und/oder die Lamelle beispielsweise elektrisch aus dem Kraftfahrzeuginnenraum betätigt werden. Hierzu ist beispielsweise in der Fahrerkonsole ein entsprechender Schaltmechanismus vorgesehen.

In einer bevorzugten Ausführungsform ist mit dem Dachsegment ein Spoiler beweglich verbunden. Der Spoiler ist insbesondere mit dem Basisdach gelenkig und/oder in horizontaler Richtung verschiebbar verbunden. Wenn das Dachsegment aus der Ebene des Basisdachs herausbewegt wird, wird dadurch automatisch der Spoiler mitbewegt oder umgekehrt, so dass das Dachsegment im geöffneten ausgefahrenen Zustand den Luftwiderstand des Kraftfahrzeugs nicht wesentlich erhöht. Um ein sich gegebenenfalls zwischen dem Spoiler und dem Dachsegment ergebenes sich veränderndes Spaltmaß auszugleichen, kann zwischen dem Dachsegment und dem Spoiler ein Längenausgleich vorgesehen sein. Der Längenausgleich wird beispielsweise über ein flexibles, insbesondere gummielastisches Material erreicht, das gleichzeitig Regenwasser abweisen kann. Um eine kinematische Verbindung zwischen dem Spoiler und dem Dachsegment zu gewährleisten, können das Dachsegment und der Spoiler über einen in Längsrichtung verschiebbaren Schiebehebel verbunden sein.

Um den Stauraum vor Umwelteinflüssen zu schützen, kann mit dem Dachsegment und mit dem Basisdach eine flexible Schutzhülle verbunden sein. Die Schutzhülle kann beispielsweise derart ausgestaltet sein, dass sie im eingefahrenen Zustand des Dachsegments zusammengefaltet ist und im ausgefahrenen Zustand Seitenwände des Stauraums ausbildet. Ferner kann die Schützhülle Öffnungsmittel aufweisen, um die Schutzhülle in einem Teilbereich öffnen zu können. Beispielsweise weist die Schutzhülle einen Reißverschluss auf, um den entgegen der Fahrtrichtung weisenden Teil der Schutzhülle öffnen zu können, so dass besonders lange Gegenstände, wie beispielsweise Surfbretter ohne zusätzliche Probleme transportiert werden können.

Besonders bevorzugt weist das Dachsegment im maximal geöffneten Zustand zum Basisdach einen vertikalen Abstand von ≥ 10,0 cm, insbesondere ≥ 30,0 cm, vorzugsweise ≥ 50,0 cm, besonders bevorzugt ≥ 80,0 cm auf. Durch diese Dimensionierung des Abstands des Dachsegments zum Basisdach, wobei der Abstand jeweils von der Oberfläche des Dachsegments zur Oberfläche des Basisdachs gemessen wird, wird einem Volumen für den Stauraum erreicht, das groß genug ist, um Gegenstände, insbesondere Gepäckstücke oder sperrige Gegenstände, lagen zu können.

Damit auch neben dem beweglichen Dachsegment Gegenstände mit dem Kraftfahrzeugdach verbunden werden können, ohne dass das sich bewegende Dachsegment an den bereits befestigten Gegenständen anstoßen kann, ist es bevorzugt einen Versatz des Dachsegments in horizontaler Richtung möglichst gering zu halten. Hierzu kann das Dachsegment im maximal geöffneten Zustand im Vergleich zum geschlossenen Zustand ein Versatz in horizontaler Richtung von ≤ 10,0 cm, insbesondere ≤ 5,0 cm, vorzugsweise ≤ 2,0 cm, besonders bevorzugt ≤ 1,0 cm und weiter bevorzugt ≤ 0,5 cm aufweisen. Durch diese Dimensionierung des Versatzes wird die Funktionalität des Kraftfahrzeugdachs zum Transport weiterer Gegenstände auf dem Kraftfahrzeugdach nicht wesentlich eingeschränkt, wobei gleichzeitig mehrere alternative Betätigungseinrichtungen zur Bewegung des Dachsegments je nach beabsichtigtem Anwendungsfall ausgewählt werden können.

Die Erfindung betrifft ferner eine Kraftfahrzeugkarosserie, die insbesondere für Vans, Kombis oder Kleinbusse vorgesehen ist und ein Kraftfahrzeugdach aufweist, das wie vorstehend beschrieben aus- und weitergebildet sein kann. Vorzugsweise sind ein linker Dachholm und ein rechter Dachholm vorgesehen, so dass das Kraftfahrzeugdach als einzelnes Modul sicher mit der Kraftfahrzeugkarosserie verbunden werden kann. Das Kraftfahrzeugdach kann insbesondere mit den Dachholmen abschließen, so dass die Dachholme das Basisdach begrenzen. Insbesondere sind eine rechte Reling und eine linke Reling vorgesehen, mit deren Hilfe auf dem Kraftfahrzeugdach Gepäckstücke und sperrige Gegenstände befestigt werden können. Vorzugsweise weist das Dachsegment im maximal geöffneten Zustand zu der Oberfläche des Basisdachs einen Abstand auf, der größer ist als das 1,5 -fache, insbesondere 2,0 -fache, vorzugsweise 3,5 -fache und besonders bevorzugt das 5,0 -fache des Abstands der Oberfläche der Dachreling zur Oberfläche des Basisdachs. Durch diese Dimensionierung des Abstands des Dachsegments zum Basisdach kann durch das Dachsegment ein zusätzliches Befestigungsmittel ausgebildet werden, mit deren Hilfe ein zu transportierender Gegenstand auf dem Kraftfahrzeugdach sicher befestigt, insbesondere verschnürt werden kann. Beispielsweise kann der mit den Dachrelings verbundene Transportgegenstand durch das ausgefahrene Dachsegment vor Fahrtwind geschützt werden. Besonders bevorzugt befindet sich die Oberfläche des Dachsegments auf der im Wesentlichen gleichen Höhe wie die Oberfläche der Dachreling, so dass der Luftwiderstand quer zur Fahrtrichtung im Wesentlichen nicht erhöht ist und gleichzeitig eine Vertiefung im Dachhimmel und/oder im Basisdach zur Aufnahme des Dachsegments nicht erforderlich ist.

Vorzugsweise erstreckt sich das Dachsegment von dem linken Dachholm bis zum rechten Dachholm, wodurch über die gesamte Breite des Kraftfahrzeugsdachs der Stauraum erforderlichenfalls vergrößert werden kann.

Nachfolgend wird die Erfindung unter Bezugnahme auf die anliegenden Zeichnungen anhand bevorzugter Ausführungsbeispiele näher erläutert.

Es zeigen:
- Fig. 1:: eine schematische perspektivische Ansicht eines Kraftfahrzeugs mit dem erfindungsgemäßen Kraftfahrzeugdach in einer ersten Ausführungsform,
- Fig. 2:: eine schematische perspektivische Innenansicht des Kraftfahrzeugs aus Fig. 1 und
- Fig. 3:: eine schematische Seitenansicht des Kraftfahrzeugdachs aus Fig. 1

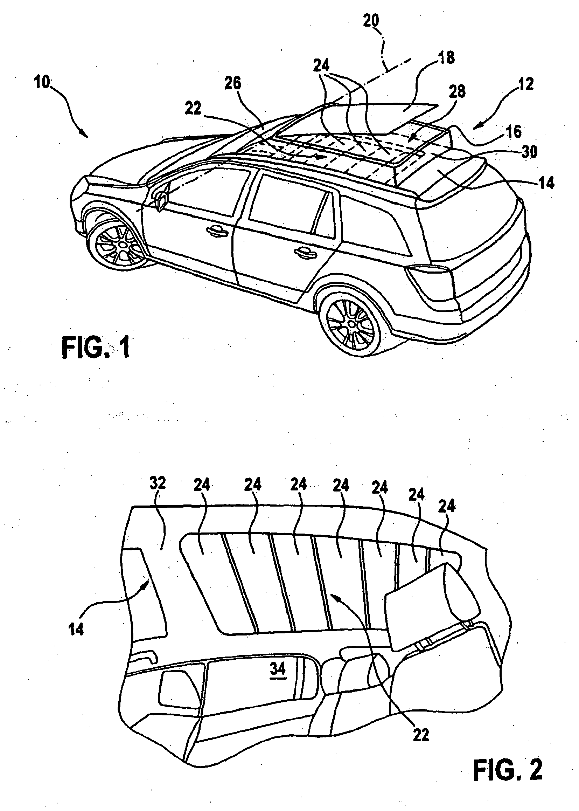

Ein in Fig. 1 dargestelltes Kraftfahrzeug 10 weist ein Kraftfahrzeugdach 12 auf, das ein Basisdach 14 und ein im Wesentlichen in vertikaler Richtung bewegbares Dachsegment 16 aufweist. Im dargestellten Ausführungsbeispiel weist das Dachsegment 16 ein oberes Dachelement 18 auf, das an einer Stirnseite um eine quer zur Fahrtrichtung des Kraftfahrzeugs 10 angeordnete Schwenkachse 20 aufklappbar angeordnet ist. Alternativ kann das obere Dachelement 18 auch mehrere Teile aufweisen, die beispielsweise lamellenartig übereinander, hintereinander, untereinander oder ineinander zusammen geschoben werden können.

Im dargestellten Ausführungsbeispiel weist das Basisdach 14 ein unteres Dachelement 22 auf, das mehrere Lamellen 24 aufweist, die in Fahrtrichtung und/oder entgegen der Fahrtrichtung übereinander, untereinander oder ineinander zusammen geschoben werden können. Um den Luftwiderstand im ausgefahrenen Zustand des Dachsegments 16 zu reduzieren, ist das Dachsegment 16 mit einem Spoiler 26 verbunden, der bei der Bewegung des Spoilers 26 das Dachsegment 16 automatisch mitbewegt. Das obere Dachelement 16 und/oder das untere Dachelement 22 sowie der Spoiler 26 können zumindest teilweise transparent ausgestaltet sein, um eine Beleuchtung eines Kraftfahrzeuginnenraums 34 durch Sonnenlicht zu ermöglichen. Im dargestellten Ausführungsbeispiel ist das obere Dachelement 16 vergleichbar zu einem Fenster transparent ausgestaltet, während die Lamellen 24 des unteren Dachelements undurchsichtig ausgestaltet sind, um erforderlichenfalls als Sonnenschutz zu dienen.

Der Abstand des Dachsegments 16 zum Basisdach 14 ist im geöffneten, das heißt ausgefahrenen Zustand derart dimensioniert, dass ein Stauraum 28 mit einem Volumen ausbildet wird, das groß genug ist Gepäckstücke und/oder sperrige Gegenstände aufzunehmen. Der Stauraum 28 weist insbesondere ein Volumen von mindestens 100 Litern, vorzugsweise 200 Litern und besonders bevorzugt 300 Litern auf. Insbesondere ist es in den dargestellten Ausführungsbeispielen möglich sowohl das Transportvolumen des Kraftfahrzeuginnenraums 34 als auch das Transportvolumen des Stauraums 28 für den Transport eines Gegenstands zu verwenden, da der Gegenstand von dem Kraftfahrzeuginnenraum 34 in den Stauraum 28 hineinragen kann, wenn das untere Dachelement 22 geöffnet ist.

Zwischen dem Dachsegment 16 und dem Basisdach 14 kann ferner eine flexible Schutzhülle 30 vorgesehen sein, um den Stauraum 28 vor Umwelteinflüssen zu schützen. Die Schutzhülle 30 ist insbesondere derart ausgestaltet, dass sie im eingefahrenen Zustand des Dachsegments 16 sich automatisch zusammenfaltet.

Im geschlossenen Zustand des unteren Dachelements 22 fluchten die die Lamellen 24 im Wesentlichen zu einem Dachhimmel 32, der durch die Unterseite des Basisdachs 14 ausgebildet wird (Fig. 2). Durch die Lamellen 24 des unteren Dachelements 22 wird ein Kraftfahrzeuginnenraum 34 von dem Stauraum 28 abgegrenzt, so dass keine Gegenstände aus den Stauraum 28 in den Kraftfahrzeuginnenraum 34 fallen können. Ferner ist ein stabiler Ladeboden für den Stauraum 28 ausgebildet.

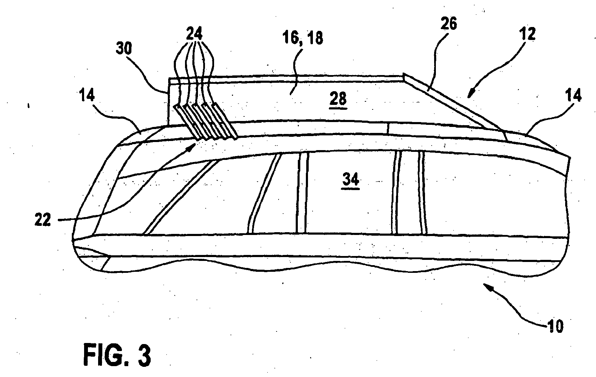

Im geöffneten Zustand des unteren Dachelements 22 (Fig. 3) sind die Lamellen 24 jeweils hintereinander angeordnet und befinden sich in einem kompakten Zustand, in dem sie im Stauraum 28 besonders wenig Platz beanspruchen. Ferner ist in diesem Zustand das Volumen des Kraftfahrzeuginnenraums 34 mit dem Volumen des Stauraums 28 verbunden, um besonders große Gegenstände transportieren zu können.

## Patentansprüche

1. Kraftfahrzeugdach umfassend
ein Basisdach (14) und
ein relativ zum Basisdach (14) bewegbares Dachsegment (16), wobei das Dachsegment (16) in einem geschlossenen Zustand an dem Basisdach (14) im Wesentlichen anliegt und in einem geöffneten Zustand zwischen dem Basisdach (14) und dem Dachsegment (16) einen zusätzlichen Stauraum (28) zur Aufnahme von Gepäckstücken ausbildet, wobei
das Dachsegment (16) mindestens ein oberes relativ zum Dachsegment (16) beweglich mit dem Dachsegment (16) verbundenes Dachelement (18) und das Basisdach (14) mindestens ein unteres relativ zum Basisdach (14) beweglich mit dem Basisdach (14) verbundenes Dachelement (22) aufweist, wobei
das untere Dachelement (22) Lamellen (24) aufweist, die untereinander und/oder übereinander und/oder ineinander und/oder hintereinander zusammenschiebbar sind,
**dadurch gekennzeichnet, dass**
das obere Dachelement (18) zumindest teilweise transparent und das untere Dachelement (22) undurchsichtig ist.

2. Kraftfahrzeugdach nach Anspruch 1 **dadurch gekennzeichnet, dass** mit dem Basisdach (14) ein Spoiler (26) verbunden ist und die Lamellen (24) im zusammengeschobenen Zustand unterhalb des Spoilers (26) angeordnet sind, wobei der Spoiler (26) insbesondere beweglich mit dem Dachsegment (16) verbunden ist.

3. Kraftfahrzeugdach nach einem der Ansprüche 1 bis 2, **dadurch gekennzeichnet, dass** das Dachsegment (16) im Wesentlichen nur vertikal bewegbar ist.

4. Kraftfahrzeugdach nach Anspruch 3, **dadurch gekennzeichnet, dass** ein in den Stauraum (28) weisender Beladungssensor zur Detektion von Gegenständen vorgesehen ist.

5. Kraftfahrzeugdach nach Anspruch 3 oder 4, **dadurch gekennzeichnet, dass** mit dem Dachsegment (16) und dem Basisdach (14) eine flexible Schutzhülle (30) zum Schutz des Stauraums (28) vor Umwelteinflüssen verbunden ist.

6. Kraftfahrzeugdach nach einem der Ansprüche 1 bis 5, **dadurch gekennzeichnet, dass** mindestens eine Verriegelungseinrichtung zur Arretierung des Dachsegments (16) und/oder des Dachelements (18, 22) und/oder der Lamellen (24) vorzugsweise in verschiedenen Positionen vorgesehen ist.

7. Kraftfahrzeugdach nach einem der Ansprüche 1 bis 6, **dadurch gekennzeichnet, dass** das Dachsegment (16) im maximal geöffneten Zustand zum Basisdach (14) einen vertikalen Abstand von ≥ 10,0 cm, insbesondere ≥ 30,0 cm, vorzugsweise ≥ 50,0 cm und besonders bevorzugt ≥ 80,0 cm aufweist.

8. Kraftfahrzeugdach nach einem der Ansprüche 1 bis 7, **dadurch gekennzeichnet, dass** das Dachsegment (16) im maximal geöffneten Zustand im vergleich zum geschlossenen Zustand einen Versatz in horizontaler Richtung von ≤ 10,0 cm, insbesondere ≤ 5,0 cm, vorzugsweise ≤ 2,0 cm, besonders bevorzugt ≤ 1,0 cm und weiter bevorzugt ≤ 0,5 cm aufweist.

9. Kraftfahrzeugkarosserie, insbesondere für Vans, Kombis (10) oder Kleinbusse, mit einem Kraftfahrzeugdach (12) nach einem der Ansprüche 1 bis 8, wobei insbesondere eine rechte Reling und eine linke Reling vorgesehen sind und das Dachsegment (16) im maximal geöffneten Zustand zum Basisdach (14) einen Abstand aufweist, der größer ist als das 1,5-flache, insbesondere 2,0-fache, vorzugsweise 3,5-fache und besonders bevorzugt das 5,0-fache des Abstands der Oberfläche der Dachreling zur Oberfläche des Basisdachs (14).

10. Kraftfahrzeugkarosserie nach Anspruch 9 **dadurch gekennzeichnet, dass** ein linker Dachholm und ein rechter Dachholm vorgesehen sind und das Basisdach (14) mit den Dachholmen verbunden ist und insbesondere seitlich mit den Dachholmen abschließt.

11. Kraftfahrzeugkarosserie nach Anspruch 9 oder 10 **dadurch gekennzeichnet, dass** sich das Dachsegment (16) von dem linken Dachholm zum rechten Dachholm erstreckt.

## Claims

1. A motor vehicle roof, comprising
a base roof (14) and
a roof segment (16) which can be moved relative to the base roof (14), wherein the roof segment (16) substantially rests in a closed state on the base roof (14), and in an open state forms an additional storage space (28) for accommodating baggage between the base roof (14) and the roof segment (16), wherein
the roof segment (16) comprises at least one upper roof element (18) which is movably connected to the roof segment (16) relative to the roof segment (16), and the base roof (14) comprises at least one bottom roof element (22) which is connected to the base roof (14) in a movable manner relative thereto, wherein
the bottom roof element (22) comprises lamellae (24) which can be pushed beneath each other and/or on top of each other and/or into each other and/or behind one another, **characterized in that**
the upper roof element (18) is at least partly transparent and the bottom roof element (22) is non-transparent.

2. A motor vehicle roof according to claim 1, **characterized in that** a spoiler (26) is connected to the base roof (14), and the lamellae (24) are arranged beneath the spoiler (26) in the state when pushed together, wherein the spoiler (26) is especially movably connected to the roof segment (16).

3. A motor vehicle roof according to one of the claims 1 to 2, **characterized in that** the roof segment (16) is substantially only vertically movable.

4. A motor vehicle roof according to claim 3, **characterized in that** a loading sensor facing the storage space (28) is provided for detecting objects.

5. A motor vehicle roof according to claim 3 or 4, **characterized in that** a flexible protective cover (33) is connected to the roof segment (16) and the base roof (14) for the protection of the storage space (28) from ambient influences.

6. A motor vehicle roof according to one of the claims 1 to 5, **characterized in that** at least one locking device is provided for locking the roof segment (16) and/or the roof element (18, 22) and/or the lamellae (24), preferably in different positions.

7. A motor vehicle roof according to one of the claims 1 to 6, **characterized in that** in the maximum open state the roof segment (16) has a vertical distance of ≥ 10.0 cm from the base roof (14), especially ≥ 30.0 cm, preferably ≥ 50.0 cm, and more preferably ≥ 80.0 cm.

8. A motor vehicle roof according to one of the claims 1 to 7, **characterized in that** in the maximum open state the roof segment (16) has an offset in the horizontal direction of ≤ 10.0 cm in comparison with the closed state, especially ≤ 5.0 cm, preferably ≤ 2.0 cm, more preferably ≤ 1.0 cm and even further preferably ≤ 0.5 cm.

9. A motor vehicle body, especially for vans, station wagons (10) or minibuses, comprising a motor vehicle roof (12) according to one of the claims 1 to 8, wherein especially a right railing and a left railing are provided, and the roof segment (16) has a distance from the base roof (14) in the maximum open state which is greater than 1.5 times, especially 2.0 times, preferably 3.5 times, and more preferably 5.0 times the distance of the surface of the roof railing from the surface of the base roof (14).

10. A motor vehicle body according to claim 9, **characterized in that** a left roof pillar and a right roof pillar are provided, and the base roof (14) is connected to the roof pillars and is especially terminated laterally with the roof pillars.

11. A motor vehicle body according to claim 9 or 10, **characterized in that** the roof segment (16) extends from the left roof pillar to the right roof pillar.

## Revendications

1. Toit de véhicule à moteur comprenant
un toit de base (14) et
un segment de toit (16) déplaçable par rapport au toit de base (14), lequel segment de toit (16) repose pour l'essentiel sur le toit de base (14) dans un état fermé et forme dans un état ouvert entre le toit de base (14) et le segment de toit (16) un espace de rangement supplémentaire (28) pour recevoir des bagages,
dans lequel le segment de toit (16) comporte au moins un élément de toit supérieur (18) relié au segment de toit (16) avec possibilité de se déplacer par rapport au segment de toit (16) et le toit de base (14) comporte au moins un élément de toit inférieur (22) relié au toit de base (14) avec possibilité de se déplacer par rapport au toit de base (14),
l'élément de toit inférieur (22) comportant des lamelles (24) qui peuvent être glissées les unes sous les autres et/ou par-dessus les autres et/ou dans les autres et/ou derrière les autres,
**caractérisé en ce que** l'élément de toit supérieur (18) est au moins partiellement transparent et l'élément de toit inférieur (22) n'est pas transparent.

2. Toit de véhicule à moteur selon la revendication 1, **caractérisé en ce qu'**un déflecteur (26) est relié au toit de base (14) et les lamelles (24) regroupées sont disposées en dessous du déflecteur (25), le déflecteur (26) étant relié en particulier de manière mobile au segment de toit (16).

3. Toit de véhicule à moteur selon l'une des revendications 1 à 2, **caractérisé en ce que** le segment de toit (15) ne peut pour l'essentiel être déplacé que verticalement.

4. Toit de véhicule à moteur selon la revendication 3, **caractérisé en ce qu'**un détecteur de chargement dirigé vers l'espace de rangement (28) est prévu pour détecter des objets.

5. Toit de véhicule à moteur selon la revendication 3 ou 4, **caractérisé en ce qu'**une enveloppe de protection souple (30) servant à protéger l'espace de rangement (28) des influences de l'environnement est reliée au segment de toit (16) et au toit de base (14).

6. Toit de véhicule à moteur selon l'une des revendications 1 à 5, **caractérisé en ce qu'**au moins un dispositif de verrouillage est prévu pour bloquer le segment de toit (16) et/ou l'élément de toit (18, 22) et/ou les lamelles (24), de préférence dans différentes positions.

7. Toit de véhicule à moteur selon l'une des revendications 1 à 6, **caractérisé en ce que** le segment de toit (16) présente, dans l'état ouvert au maximum, une distance maximale par rapport au toit de base (14) de ≥ 10,0 cm, en particulier ≥ 30,0 cm, de préférence ≥ 50,0 cm et tout particulièrement ≥ 80,0 cm.

8. Toit de véhicule à moteur selon l'une des revendications 1 à 7, **caractérisé en ce que** le segment de toit (16) présente dans l'état ouvert au maximum, par rapport à l'état fermé, un décalage dans le sens horizontal de ≤ 10,0 cm, en particulier ≤ 5,0 cm, de préférence ≤ 2,0 cm, notamment ≤ 1,0 cm et encore plus de préférence ≤ 0,5 cm.

9. Carrosserie de véhicule à moteur, en particulier pour des vans, des breaks (10) ou des minibus, avec un toit de véhicule à moteur (12) selon l'une des revendications 1 à 8, dans laquelle sont prévues en particulier une barre de toit de droite et une barre de toit de gauche et le segment de toit (16) présente, dans l'état ouvert au maximum, une distance par rapport au toit de base (14) qui est plus grande que 1,5 fois, en particulier 2,0 fois, de préférence 3,5 fois et tout particulièrement 5,0 fois la distance entre la surface entre la barre de toit de toit et la surface du toit de base (14).

10. Carrosserie de véhicule à moteur selon la revendication 9, **caractérisée en ce que** sont prévus un longeron de toit de gauche et un longeron de toit de droite et le toit de base (14) est relié aux longerons de toit et en particulier se raccorde latéralement aux longerons de toit.

11. Carrosserie de véhicule à moteur selon la revendication 9 ou 10, **caractérisée en ce que** le segment de toit (16) s'étend du longeron de toit de gauche au longeron de toit de droite.
